# EUROPEAN PATENT APPLICATION

(11) **EP 2 735 748 A2**
(43) Date of publication of application: **28.05.2014**
(21) Application number: 13194354.0
(22) Date of filing: 26.11.2013
(51) Int. Cl.: F16B 41/00

(54) **Fastener**

(30) Priority: 27.11.2012 DE 202012104611 U
(71) Applicant: Newfrey LLC, Newark, Delaware 19711 (US)
(72) Inventor: Kempf, Christian, 35394 Gießen (DE); Rosemann, Frank, 35394 Gießen (DE)
(74) Representative: Haar, Lucas Heinz Jörn

(57) **Abstract**

A fastener (1) comprises a basic member (2), which has a recess (10) with an opening (11) for a bolt, and a disk member (3), which is connected by at least one predetermined breaking point (5) with the basic member (2) and has a hole (12) arranged coaxial to the opening (11). The disk member (3) contains a circular clamping disk (4), which is designed to hold the bolt slipped through the hole (12) undetachable in the disk member (3).

## Description

The invention relates to a fastener for fastening to a bolt, having a basic member which for the bolt has a recess with at least one opening and having a disk member that is connected with the basic member by at least one predetermined breaking point and has a hole arranged substantially coaxial to the opening and penetrating the disk member.

A fastener of the kind indicated is disclosed in US 6 109 848 A. It consists of a nut of synthetic material with a blind hole for accommodation of the bolt, forming the basic member. The opening of the blind hole is surrounded by a collar, on which is formed the disk member, designed as a perforated disk by way of a predetermined breaking point. The perforated disk has some distance from the front of the nut. It is fastened during the assembly of the nut by pressing it onto the structural part, after breaking of the predetermined breaking point, pushed along the collar against the nut and clamped between the nut and the structural part, and serves for sealing between the nut and the fastened structural part.

The fastening of some added components and instruments in motor vehicles, e.g., of control mechanisms and alarm devices frequently requires that fastening be made theft-proof. Here, the fastening means should be designed so that detachment of the fastening is possible only with great effort and not without the destruction of the fastening means.

In order to produce a secure screw connection of components subject to theft in a vehicle against undesired detachment, DE 103 26 005 A1 discloses a pull-off nut which is formed of a threaded part with internal thread, a profiled nut head for tightening the internal thread and a predetermined breaking point formed between the latter. The threaded part has the form of a truncated cone and is connected with the front side of smaller diameter by the predetermined breaking point with the nut head. Upon assembly, the nut head is separated from the threaded part at the predetermined breaking point by a pull moment. Here, the pull moment is dependent upon the breaking moment of the predetermined breaking point.

In addition, DE 10 2006 011 419 A1 discloses a fastening device having a clamping disk for fastening a flat structural part to an additional structural part provided with a threaded bolt. The clamping disk consists of spring steel and has a conically designed spanner, which is formed of bending claws directed to the central axis of the clamping disk for support on the threaded bolt.

The object of the invention is to improve a fastener of the kind mentioned at the onset in such a way that after its fastening, it can no longer be detached without being destroyed.

This object is accomplished by a fastener having the features indicated in Claim 1. Advantageous developments of the fastener are indicated in the additional claims.

According to the invention, the fastener designed for fastening to a bolt comprises a basic member which has a recess with at least one opening for the bolt, and a disk member which is connected by at least one predetermined breaking point with the basic member and a hole arranged substantially coaxial to the opening of the recess and penetrating the disk member, where the disk member has a locking element that is designed to hold the bolt in the hole.

The fastener according to the invention may be fastened like a nut by screwing or placement onto a threaded bolt, where by turning and tightening of the basic member the structural part to be fastened can be clamped over the disk member. Upon assembly of the fastener, the locking element also comes into engagement with the bolt and thereby produces fastening of the disk member to the bolt independent of the basic member. If the basic member is detached by unscrewing, the locking element prevents the disk member from becoming detached. By breaking of the predetermined breaking point, which may occur upon detachment of the basic member or even earlier during assembly of the fastener, the basic member and the disk member are separated, so that the disk member remains in a fastening position and detachment of the structural part held by it is prevented. In this way, effective theft protection is obtained.

According to an additional proposal of the invention, the disk member may be arranged at some axial distance from the basic member, and the predetermined breaking point may be designed so that it breaks apart upon a reduction of the axial distance between the basic member and the disk member. This design has the advantage that breakage of the predetermined breaking point is already effected upon assembly of the fastener, so that relatively great forces, namely the press-on forces obtainable by tightening of the basic member, are available for breaking the predetermined breaking point. Upon unscrewing of the basic member, the latter is then already separated from the disk member, and the disk member and the clamping disk are therefore not loaded by forces of the predetermined breaking point in the direction of detachment. The breaking point may therefore be designed relatively sturdy, so that the risk of a premature break, for example upon handling, is minimized.

The fastener further has the advantage that it may be assembled in two separate steps. In the first step, the fastener may be slipped onto a bolt with relatively little force, where only the locking element comes into engagement with the bolt, and the fastener in a preassembly position locks onto the bolt. This assembly step may be performed by manually, for example. In a second subsequent assembly step, with the aid of a tool, the basic member is then screwed or brought by impact into the final fastening position, and the breaking point is broken.

The locking element may be an integral component of the disk member, or it may consist of a separate element that is joined together with the disk element. The locking element preferably has a plurality of elastically deformable locking fingers which project into the hole of the disk member so as to engage with the bolt slipped through the hole. On the side of the disk member turned toward the basic member, the locking element preferably is covered by a wall adjoining the hole. It is thereby ensured that the locking element, after removal of the basic member, is not accessible and is not visible after removal of the basic member, so that it becomes very difficult to find a way to detach the locking element.

For obtaining especially high holding forces, the locking element according to the invention may be a clamping disk, which is arranged and held in a disk recess of the disk member. The clamping disk may consist of metal, in particular of spring steel, and may have a central spanner formed of bending claws. Such an embodiment of the clamping disk allows an especially high holding force to be obtained by simple means.

In order to accommodate the clamping disk, according to the invention, a chamber crossing the hole with a chamber opening extending radially to the axis of the hole may be formed in the disk member, through which the clamping disk is capable of insertion into the chamber. A springy locking finger that is suitable for holding the clamping disk in the chamber may be arranged in the chamber opening. This design is simple and inexpensive to produce and permits, except for access through the chamber opening, an all-around embrace of the clamping disk by the chamber walls of the disk member. The clamping disk can be simply mounted through the chamber opening and is secured by the springy locking fingers against falling out of the chamber opening. After assembly of the fastener, the bolt penetrates the hole of the disk member and the spanner of the clamping disk and thereby forms a locking bar that holds the clamping disk in the disk member secure against detachment.

The disk member may preferably have substantially the form of a cylindrical disk, and the basic member may have a tool-engagement region and, on the side turned toward the disk member, a disk-like flange which at its peripheral edge, has a plurality of arms embracing the disk member, which are connected with the disk member by predetermined breaking points. In this embodiment, the basic member and disk member may be formed in one piece of a thermoplastic synthetic material in simple advantageous fashion.

A preferred exemplary embodiment of the invention is described below and is illustrated in the drawing, wherein:

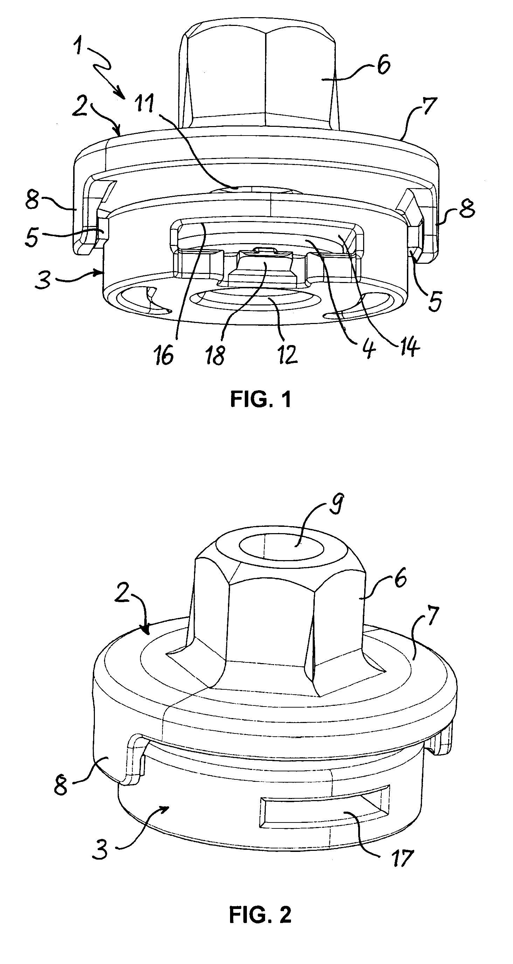

- Figure 1: shows a perspective view of a fastener according to the invention from a first side,
- Figure 2,: a perspective view of the fastener of Figure 1 from a second opposite side,
- Figure 3,: an axial section of the fastener of Figure 1,
- Figure 4,: an axial section of the fastener of Figure 1 in an assembly position connecting two structural parts together,
- Figure 5,: a perspective view of a mounted situation of a fastener of Figure 1, and
- Figure 6,: a perspective view of the mounted situation of Figure 5 after removal of the basic member.

The fastener 1 shown in the drawing comprises a basic member 2, a disk member 3 and a clamping disk 4. The basic member 2 and the disk member 3 are primary formed in one piece of thermoplastic synthetic material and are connected together by predetermined breaking points 5. The basic member 2 has a tool-engagement region 6 designed as a hexagonal prism and, at its end adjacent to the disk member 3, a circular disk-shaped flange 7. The flange 7 is provided at two points of its outer edge lying opposite each other with two arms 8, which extend in the direction of the disk member 3 and embrace the disk member 3 on the outside. Between the facing inner sides of the arms 8 and the disk member 3 are formed the predetermined breaking points 5.

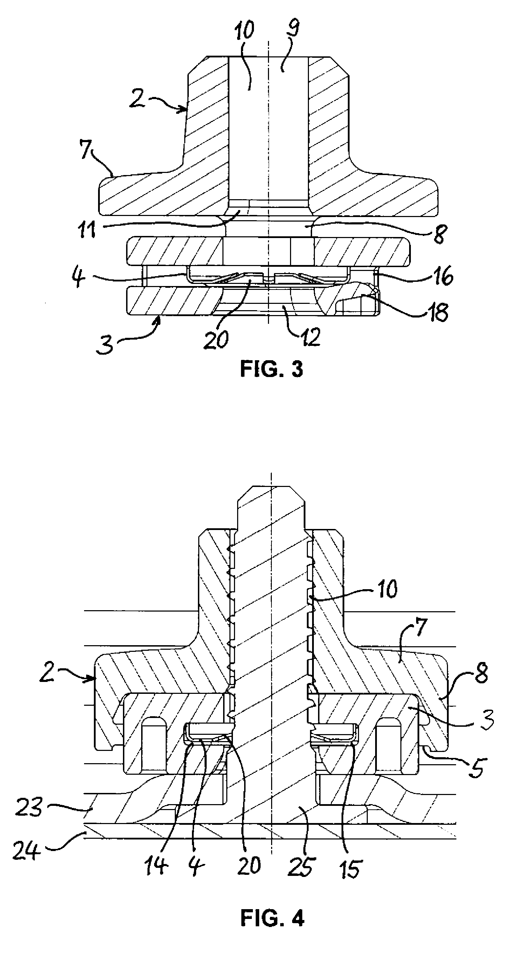

As can be seen in Figure 3, the basic member 2 has a bore 9 penetrating it axially, which forms a recess 10 for a threaded bolt. The opening 11 of the bore 9 turned toward the disk member 3 is beveled, so as to facilitate insertion of the threaded bolt.

The disk member 3 has the form of a cylindrical disk that has a smaller outside diameter than the flange 7. The disk member 3 is held on the basic member 2 by the predetermined breaking points 5 at some distance from the flange 7 and aligned parallel to the latter. The disk member 3 has a hole 12 coaxial to the bore 9, which hole 12 penetrates the disk member 3 axially and which has an inside diameter that is greater than the outside diameter of a threaded bolt, for the accommodation of which the fastener 1 is designed. On the side turned away from the basic member 2 the opening of the hole 12 is widened conically outward.

The disk member 3 is provided with a central disk recess 14, in which is arranged the clamping disk 4. The disk recess 14 is formed by a cylindrical chamber 15, which has a greater diameter than the hole 12 and is arranged coaxial to the hole 12. The chamber 15 has an opening 16 extending radially to the hole axis, through which the clamping disk 4 is capable of insertion into the chamber 15. On the side opposite the chamber opening 16 the chamber 15 is provided with a second smaller chamber opening 17, which may serve for the introduction of a tool for pushing the clamping disk 4 out of the chamber 15, so as to eliminate any faulty mounting of the clamping disk 4.

At the chamber opening 16 there is arranged a springy locking finger 18, which projects into the chamber opening 16 and holds the clamping disk 4 in the chamber 15. For insertion of the clamping disk 4 into the chamber 15, the locking finger 18 may be pressed to the side out of the chamber opening 16 by the clamping disk 4.

The clamping disk 4 consists of metal, in particular of spring steel. It has the form of a circular disk with a central opening for the passage of a threaded bolt and a flanged circular cylindrical edge. Its central opening is surrounded by a conical spanner 20, which has a plurality of bending claws for the clamping of a threaded bolt.

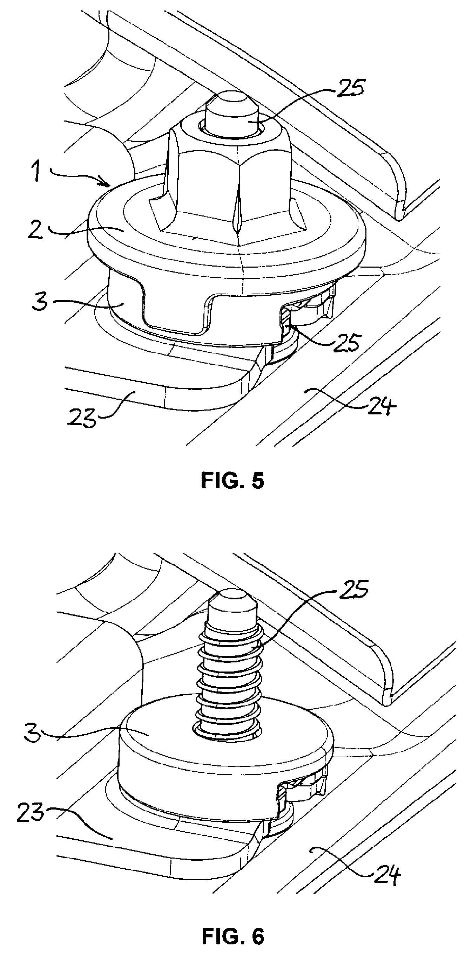

Figure 4 shows the mounted position of the fastener 1 in the fastening of a structural part 23 to a supporting part 24 by means of a threaded bolt 25 welded thereon. For obtaining the mounted situation represented, first the structural part 23 is set on the supporting part 24, the threaded bolt 25 penetrating a fastening opening in the structural part 23. Next, the fastener 1 is pressed onto the threaded bolt 25. This may be done either manually or with the aid of an assembly robot. When it is pressed on, the free end of the threaded bolt 25, through the hole 12 in the disk member 3, first comes into contact with the clamping disk 4, where pressing on requires a force acting upon the fastener 1 in the axial direction, so that the bending claws of the spanner 20 can be bent apart by the threaded bolt 25 and the end of the bolt 25 can penetrate far enough into the recess 10 in the basic member 2 until, with a section of greater diameter provided with an external thread, it strikes the bevel of the opening 11. With the aid of a turning tool engaging in the tool-engagement region 6, the fastener 1 is then screwed onto the threaded section of the bolt 25. In this operation, the disk member 3 and the clamping disk 4 are also shifted onto the threaded bolt 25, whereupon the bending claws of the spanner 20 spring over the threads of the threaded rib. In the screwed-on end position the flange 7 of the basic member 2 lies on the disk member 3 and presses the structural part 23 over the disk member 3 onto the supporting part 24. This fastening position is shown in Figures 4 and 5.

The predetermined breaking points 5 may be designed so that they have a common breaking load that is smaller than the axial force that is necessary to press the clamping disk 4 over the threaded section of the bolt 25 in the direction of the supporting part 24. The breaking points 5 are therefore already destroyed when the fastener 1 has been pressed on the bolt 25. In this way, it can be ensured that complete separation of the basic member 2 from the disk member 3 takes place in assembly of the fastener 1.

Alternatively to the example described, the breaking points 5 may be designed so that the breaking force of the breaking points 5 is greater than the force required for displacement of the clamping disk 4, so that the disk member 3 maintains its distance from the basic member 2 until it comes to rest on the structural part 23. By further screwing-on of the basic member 2 the distance between the basic member 2 and the disk member 3 is then reduced, whereupon the load of the breaking points 5 exceeds the breaking load and the breaking points 5 break.

Figure 6 shows the assembled situation of Figure 4 after the basic member 2 has been unscrewed and removed. The disk member 3 continues to be held on the bolt 25 by the clamping element arranged therein and can be removed neither by axial pressure nor by turning of the disk member 3. The clamping disk 4 is fastened undetachable to the bolt 25 by means of its bending claws engaging in the bolt thread and because its circular external contour cannot be unscrewed from the bolt 25 by turning of the disk member 3. In this way, the structural part 23, even after removal of the basic member 2, is held theft-proof on the bolt 25 and the supporting part 24 welded to it. The disk member 3 covers the clamping disk 4 with its wall, so that it is not visible and is difficult for tools to access for forceful detachment.

## Claims

1. Fastener (1) for fastening to a bolt, having a basic member (2) which for the bolt has a recess (10) with at least one opening (11), and having a disk member (3) that is connected with the basic member (2) by at least one predetermined breaking point (5) and has a hole (12) arranged substantially coaxial to the opening (11) and penetrating the disk member (3), **characterized in that** the disk member (3) has a locking element which is designed to hold the bolt in the hole (12).

2. Fastener according to Claim 1, **characterized in that** the disk member (3) is arranged at some axial distance from the basic member (2) and the predetermined breaking point (5) is designed so that it breaks apart upon a reduction of the axial distance between the basic member (2) and the disk member (3).

3. Fastener according to either of Claims 1 or 2, **characterized in that** the locking element has a plurality of elastically deformable locking fingers, which project into the hole (12) in the disk member (3).

4. Fastener according to any of the preceding claims, **characterized in that** the locking element on the side of the disk member (3) turned toward the basic member (2) is covered by a wall adjoining the hole (12).

5. Fastener according to any of the preceding claims, **characterized in that** the locking element is a circular clamping disk (4), which is arranged and held in a disk recess (14) of the disk member (3).

6. Fastener according to Claim 5, **characterized in that** the clamping disk (4) consists of metal and has a ring-shaped spanner (20) formed of bending claws.

7. Fastener according to any of the preceding claims, **characterized in that** the disk recess (14) is formed of a chamber (15) arranged in the disk member (3) and crossing the hole (12) with a chamber opening (16) extending radially to the axis of the hole, through which the clamping disk (4) is capable of insertion into the chamber (15).

8. Fastener according to any of the preceding claims, **characterized in that** in the chamber opening (16) is arranged a springy locking finger (18), by which the clamping disk (4) is capable of being held in the chamber (15).

9. Fastener according to any of the preceding claims, **characterized in that** the disk member (3) has substantially the form of a cylindrical disk.

10. Fastener according to any of the preceding claims, **characterized in that** the basic member (2) has a tool-engagement region (6) and on the side turned toward the disk member (3) a disk-like flange (7), which at its peripheral edge has a plurality of arms (8) embracing the disk member (3), which are connected with the disk member (3) by predetermined breaking points (5).

11. Fastener according to any of the preceding claims, **characterized in that** the basic member (2) and the disk member (3) consist of a thermoplastic synthetic material and are primary formed in one piece.
